# EUROPEAN PATENT APPLICATION

(11) **EP 2 254 281 A2**
(43) Date of publication of application: **24.11.2010**
(21) Application number: 09174400.3
(22) Date of filing: 28.10.2009
(51) Int. Cl.: H04L 12/40

(54) **Network system with chainlike network and backup method for chainlike network**

(30) Priority: 21.05.2009 TW 98116952
(71) Applicant: Moxa Inc., Shing Tien City Taipei Country 231 (TW)
(72) Inventor: Ling, Ming Hunag, 231, Taipei County (TW)
(74) Representative: Lang, Christian

(57) **Abstract**

This specification provides a network system with a chainlike network and backup method for the chainlike network. Both ends of a chainlike network are set as a head switch and a tail switch. The port between the head switch or the tail switch and an external network is set as blocking by default. When the chainlike network breaks, the two switches next to the break point send a first control packet to the head switch and the tail switch, setting the blocking ports as forwarding. The chainlike network can thus rapidly resume its communications with outside. The mechanism can increase the reliability of a network and the cost of building such a network.

## Description

### BACKGROUND OF THE INVENTION

### Field of Invention

The invention relates to a network system with a chainlike network and backup method for the chainlike network. In particular, the chainlike network is built with a backup mechanism, with the communication ports of the head switch and the tail switch with outside set as forwarding and blocking, respectively. When the chainlike network breaks, two switches next to the break point send out a control packet to the head switch and the tail switch, setting the blocking port as forwarding. This resumes the communications of the chainlike network with outside. To connect with the external network, there is no need to establish a coordination mechanism. This reduces the complexity of the network and increases the reliability thereof.

### Related Art

Information and Internet technologies have been making a lot of progress in recent years. Through the network technology, people can readily communicate without the spatial limitation. Not only the advances in network technology make people's life more convenient, it also brings a lot of profit and better efficiency to enterprises. However, the operation of a network may also result in some big loss for the enterprises due to the instability of network devices therein. Therefore, how to enable a network structure to rapidly recover from a breakdown and thus have higher reliability has become an important issue.

To solve the above-mentioned network breakdown problem, one usually adds a network backup device. However, the existence of a backup device is likely to become looping and result in a broadcast storm. One network device may receive several copies of the same packet at a time. The MAC address table of the network device can become unstable. In that case, the switches continuously learn and change the address table, increasing the load of the microprocessor thereof. Currently, people use the IEEE802.1D Spanning Tree Protocol (STP) to overcome the above-mentioned situation. However, under the operation of the STP, the backup device needs to start when the network device has a problem. This takes a longer recalculation time for the network to resume its operations. Therefore, to speed up the network's time to live, IEEE has added the 802.1W- Rapid Spanning Tree Protocol (RSTP). It reduces the time of converting the port states and establishes a substitute port to decrease the recalculation time.

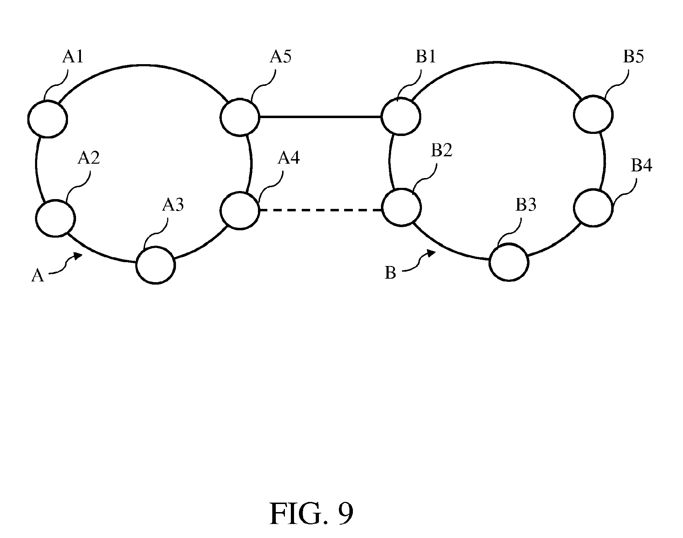

However, both the original STP and the new RSTP form a treelike topology in the network structure. If the treelike structure is too large, there will be more network nodes that slow down the backup reaction speed. This results in limitations at a network node. In practice, if the network of some industrial control device crashes too long, the production line or power factory cannot continue working. This in turn results in serious loss and damages. To have rapid recovery as well as keep more network nodes in a network, ring network structures have been proposed. The ring network structure consists of multiple network nodes, and only allows a single network node to break down. When the number of network nodes in such a structure increase, the risk also increases. For this, some manufacturers propose the structure of two ring networks to reduce the number of network nodes in each ring network and to provide a better backup mechanism. FIG. 9 shows the redundant structure of the conventional ring network. The first ring network A has several switches A1∼A5, and the second ring network B has several other switches B1∼B5. The port between the switch A5 and the switch B1 is set as forwarding. The port between the switch A4 and the switch B2 is set as blocking. A ring coupling coordination mechanism is established between the ring networks (e. g., the first ring network A and the second ring network B). The ring coupling automatically turns on the port between the switch A4 and the switch B2 when the switch A5 cannot communicate with the switch B1. Although the recovery capability of the above-mentioned network is better than the STP, the coordination mechanism between the ring networks increases the complexity. This reduces the stability of the network.

Under the strict requirement of network stability in industrial controls, the low reliability of such architecture increases the risk of no communications or machine shutdown. This greatly affects the both short- and long-term profits of enterprises. Besides, as this mechanism is based on the ring topology, the cost is higher.

In summary, the prior art always has the problem of being unable to effectively increase network reliability and reduce the cost. It is imperative to provide a better solution.

### SUMMARY OF THE INVENTION

In view of the foregoing, the invention provides a network system with a chainlike network and a backup method for the chainlike network.

The disclosed network system with a chainlike network includes an external network and a chainlike network. The external network is for communications with outside. The chainlike network connects to the external network and consists of several switches.

The chainlike network includes a head switch and a tail switch. The head switch connects to the external network via a first port, which is set as forwarding/blocking by default. The tail switch connects to the external network via a second port, which is set as blocking/forwarding by default. The head switch and the tail switch connect to the chainlike network via ports.

The disclosed chainlike network backup method is used in a chainlike network connected with an external network. The chainlike network has several switches. The switches on its two ends are called the head switch and the tail switch. The switches connected between the head and tail switches are relay switches. The head switch and the tail switch are connected to the external network via a first port and a second port. The method involves the steps of: setting the port between the tail switch and the external network as blocking and setting the ports of the other switches on the chainlike network as forwarding; when a break point occurs in the chainlike network, setting the two ports of the two switches around the break point as blocking; after the two ports of the two switches are turned from forwarding to blocking, sending a first control packet from the two switches to the head switch and the tail switch, respectively; after the tail switch receives the first control packet, setting the second port as forwarding.

Moreover, the disclosed chainlike network backup method can be used on at least two chainlike networks connected at the same time to one external network. Each chainlike network has several switches. The switches at both ends of each of the chainlike networks are taken as the head and tail switches, respectively. The switches between the head and tail switches are relay switches. The head switch and the tail switch connect to the same external network via a first port and a second port. The method in this embodiment involves the steps of: setting the ports between the tail switches and the external network as blocking and setting the ports of the other switches in the chainlike network as forwarding; when a break point occurs in the chainlike network, setting the two ports of the two switches around the break point as blocking; after the two ports of the two switches are turned from forwarding to blocking, sending a first control packet from the two switches to the head switch and the tail switch, respectively; after the tail switch receives the first control packet, setting the second port as forwarding.

Besides, the disclosed chainlike network backup method can be used on a chainlike network connected with a second chainlike network. Each of the chainlike network and the second chainlike network has several switches. The switches on both ends of the chainlike network are the head and tail switches. The other switches between the head and tail switches are relay switches. The switches on both ends of the second chainlike network are second head switch and the second tail switch. The second head switch and the second tail switch connect to an external network. The head switch connects to any one of the switches in the second chainlike network via a first port. The tail switch connects to another switch in the second chainlike network via a second port. The method in this embodiment involves the steps of: setting the second port of the tail switch as blocking and setting the other ports in the chainlike network as forwarding; when a break point occurs in the chainlike network, setting the two ports of the two switches around the break point as blocking; after the two ports of the two switches are turned from forwarding to blocking, sending a first control packet from the two switches to the head switch and the tail switch, respectively; after the tail switch receives the first control packet, setting the second port as forwarding.

As described above, the disclosed system and method differ from the prior art in that the two ends of the chainlike network are set as the head switch and tail switch. The ports between the head switch or the tail switch and the external network are set as blocking by default. When the chainlike network has a break point, the switches next to the break point send a first control packet to the head switch and the tail switch, respectively, setting the port that is originally blocking as forwarding. The network can thus quickly resume its communications with outside.

Through the above technique, the invention can increase the network reliability and lower the building cost.

### BRIEF DESCRIPTION OF THE DRAWINGS

The invention will become more fully understood from the detailed description given herein below illustration only, and thus is not limitative of the present invention, and wherein:

FIG. 1 is a block diagram of the disclosed network system with a chainlike network;

FIGS. 2A to 2C are flowcharts of a first embodiment of the disclosed chainlike network backup method;

FIGS. 2D to 2F are flowcharts of a second embodiment of the disclosed chainlike network backup method;

FIGS. 2G to 2I are flowcharts of a third embodiment of the disclosed chainlike network backup method;

FIG. 3 is a schematic view when the disclosed network system with a chainlike network is normal;

FIG. 4 is a schematic view when the disclosed network system with a chainlike network has a problem;

FIG. 5 is a schematic view of the disclosed chainlike network connected with an external network device;

FIG. 6 is a schematic view of the disclosed chainlike network connected with an external redundant network structure;

FIG. 7 is a schematic view of the disclosed chainlike network connected with a second chainlike network;

FIG. 8 is a schematic view of several chainlike networks connected together according to the invention; and

FIG. 9 is a schematic view of a conventional ring network redundant structure.

### DETAILED DESCRIPTION OF THE INVENTION

The present invention will be apparent from the following detailed description, which proceeds with reference to the accompanying drawings, wherein the same references relate to the same elements.

Before explaining the disclosed network system with a chainlike network and chainlike network backup method, we first define the terms used in the specification. The blocking state referred herein means that only a control packet is allowed to pass through a port between the switches in the chainlike network. In other words, no usual data packets can be transferred via the port from a switch to the next switch. The forwarding state referred herein means that control packet and normal data packets are allowed to pass through the port from one switch to the next. In practice, a header is used to determine whether the packet is a control packet or a usual data packet. It should be particularly mentioned that the control packet can only propagate among the switches of the chainlike network.

Besides, the head switch, tail switch and relay switch referred herein are the same network switches. The switches can be set as the head switch, tail switch, or relay switch through built-in commands or interface. It should be emphasized that the invention does not impose any limit on the number of ports associated with the switches. Even though each switch only needs two ports to implement the invention, they can have more ports for better and more powerful network communications with, for example, personal computers, personal digital assistants, etc.

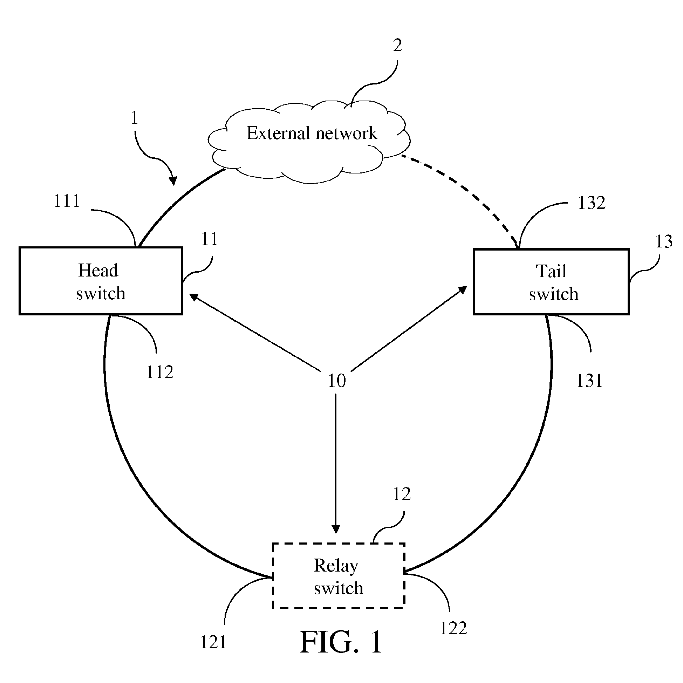

The following explanation is done with reference to the accompanying figures. Please refer to FIG. 1, which is a block diagram of the disclosed network system with a chainlike network. It includes: a chainlike network 1, an external network 2, switches 10 (including a head switch 11 and a tail switch 13), a first port 111, a second port 132, and ports 112, 131. The external network 2 is a network communicating with outside, such as a local area network (LAN) or the Internet. The chainlike network 1 connects to the external network 2. The chainlike network 1 has several switches 10, such as the head switch 11 and the tail switch 13. The head switch 11 connects via the first port 111 to the external network 2. The first port 111 is set as forwarding (or blocking) by default. The tail switch 13 connects via the second port 132 to the external network 2. The second port 132 is set as blocking (or forwarding) by default. In addition, the head switch 11 and the tail switch 13 are connected via the ports 112, 131. It should be mentioned that the predetermined states of the first port 111 and the second port 132 have to be opposite. In other words, when the first port 111 is preset as forwarding, the second port 132 is blocking by default; and when the first port 111 is preset as blocking, the second port 132 is forwarding by default.

As mentioned before, the structure of the disclosed chainlike network 1 has several switches 10. In practice, in addition to the head switch 11 and the tail switch 13, the switches 10 also include the relay switch 12 between the head switch 11 and the tail switch 13. The relay switch 12 includes at least two ports 121, 122. The head switch 11 connects via the first port 111 to the external network 2, and the first port 111 is preset as forwarding/blocking. The external network 2 here is also the network communicating with outside. The tail switch 13 connects via the second port 132 to the external network 2, and the second port 132 is preset as blocking/forwarding. The relay switch 12 connects to the head switch 11 and the tail switch 13 to form the chainlike network 1. It should be mentioned that the head switch 11 and the tail switch 13 are located at opposite ends of the chainlike network 1. The relay switch 12 is disposed between the head switch 11 and the tail switch 13. In addition to the first port 111 and the second port 132, the head switch 11 and the tail switch 13 also have at least another port 112, 131. The relay switch 12 can also have two or more ports 121, 122. This embodiment uses two ports as an example. There may also be more than one relay switch 12. The number of ports associated with each switch 10 and the number of relay switches 12 are not restricted by the invention.

Besides, the head switch 11, the relay switch 12, and the tail switch 13 in the chainlike network 1 are connected in either wired or wireless way. The wired way includes the use of twisted pair cables or fiber optic cables. The wireless way is IEEE802.11 or IEEE802.16.

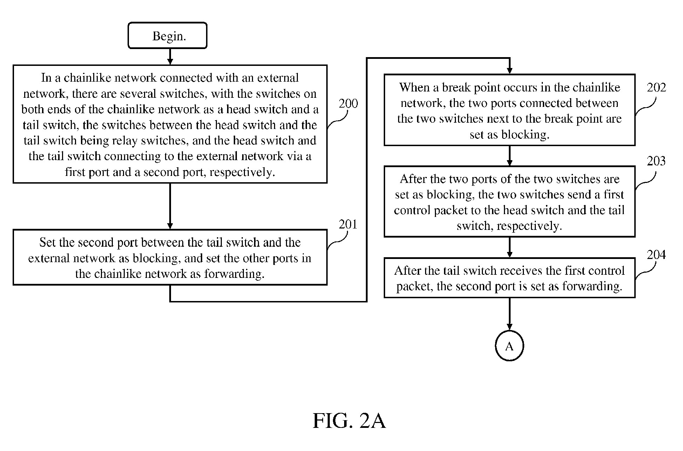

The following paragraphs use three different embodiments to explain the disclosed chainlike network backup method. The flowcharts of the first embodiment are illustrated in FIGS. 2A to 2C. In FIG. 2A, the method involves the following steps. In a chainlike network connected with an external network, there are several switches. The switches on both ends of the chainlike network are the head switch and the tail switch, respectively. The switch between the head switch and tail switch is the relay switch. The head switch and the tail switch connect to the external network via a first port and a second port (step 200). The port between the tail switch and the external network is set as blocking. The other ports on the chainlike network are set as forwarding (step 201). When a break point occurs in the chainlike network, the two switches next to the break point set the ports between them as blocking (step 202). Afterwards, these two switches send a first control packet to the head switch and the tail switch, respectively (step 203). After the tail switch receives the first control packet, it sets the second port as forwarding (step 204).

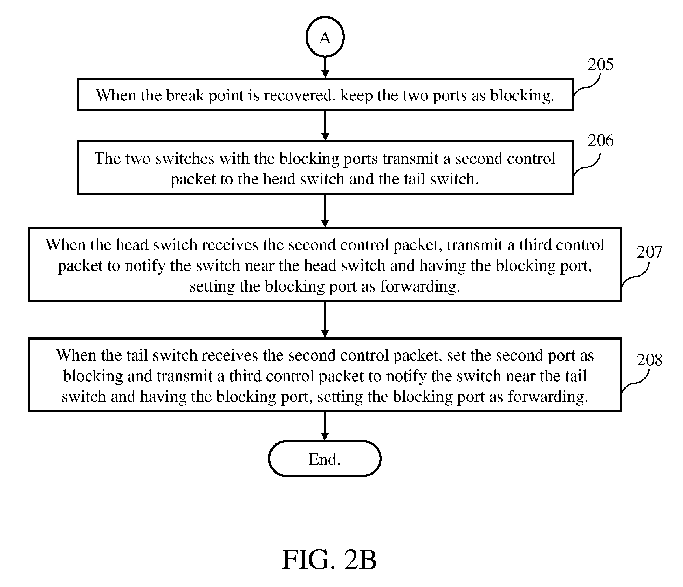

Please refer to FIG. 2B. After the break point is recovered, the ports are kept blocking (step 205). The two switches with the blocking ports send a second control packet to the head switch and the tail switch (step 206). When the head switch receives the second control packet, it sends a third control packet to the switch near the head switch and having a blocking port, setting its blocking port as forwarding (step 207). When the tail switch receives the second control packet, it sets the second port as blocking and sends another third control packet to the switch near the tail switch and having a blocking port, setting its blocking port as forwarding (step 208). It should be emphasized that the method allows the user to adjust a setting parameter to define the head switch, tail switch or relay switch. In practice, the setting parameter can be set via some command or interface provided by the network switch. Whether a break point occurs can be determined by packet transmissions or detections in the physical layers.

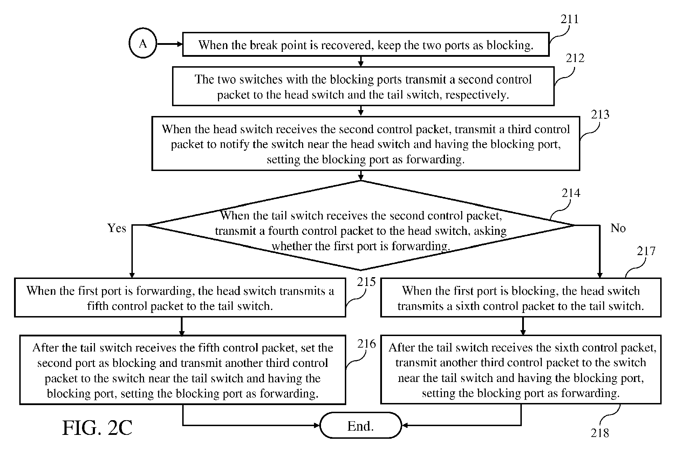

When the break point is recovered, in addition to resuming the chainlike network according to steps 205 to 208, the two ports can be kept blocking as in FIG. 2C (step 211). The two switches with the blocking ports send a second control packet to the head switch and the tail switch, respectively (step 212). When the head switch receives the second control packet, it sends a third control packet to notify the switch near the head switch and having the blocking port, setting its blocking port as forwarding (step 213). When the tail switch receives the second control packet, it transmits a fourth control packet to the head switch to ask whether the first port is forwarding (step 214). When the first port is forwarding, the head switch transmits a fifth control packet to the tail switch (step 215). After the tail switch receives the fifth control packet, it sets the second port as blocking and transmits another third control packet to the switch near the tail switch and having a blocking port, setting its blocking port as forwarding (step 216). When the first port is blocking, the head switch sends a sixth control packet to the tail switch (step 217). After the tail switch receives the sixth control packet, it sends another third control packet to the switch near the tail switch and having a blocking port, setting its blocking port as forwarding (step 218).

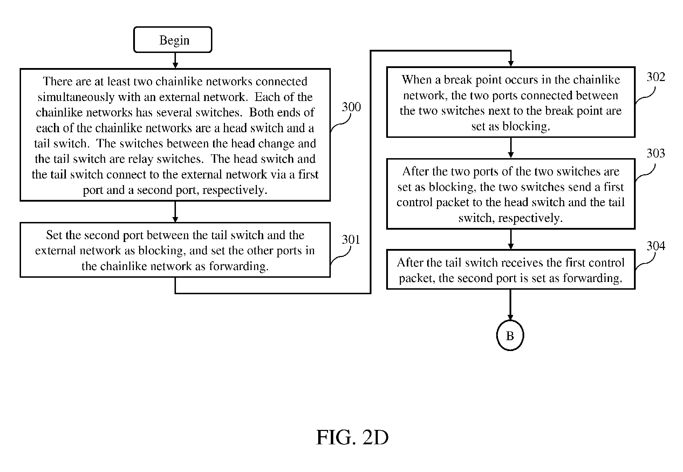

A second embodiment of the disclosed chainlike network backup method is given by the flowcharts in FIGS. 2D to 2F. Please refer to FIG. 2D. The method involves the following steps. For at least two chainlike networks connected with one external network at the same time, each of them has several switches. The switches on both ends of the chainlike networks are the head switches and the tail switches. The switches between the head switch and the tail switch are relay switches. The head switches and the tail switches connect to the same external network via the first ports and the second ports (step 300). The second ports between the tail switches and the external network are set as blocking. The other ports on the chainlike network are set as forwarding (step 301). When a break point occurs in the chainlike network, the two switches next to the break point set the two ports between them as blocking (step 302). After the two ports of the two switches become blocking, the two switches send a first control packet to the head switch and the tail switch, respectively (step 303). After the tail switch receives the first control packet, the second port is set as forwarding (step 304).

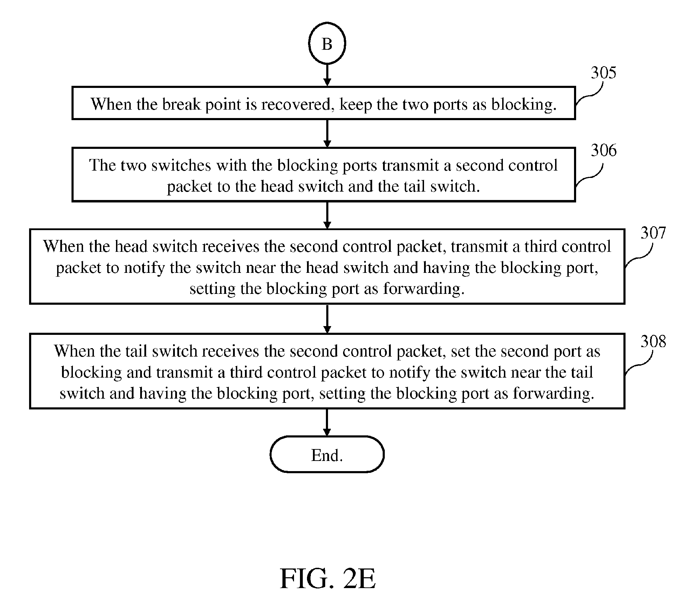

Please refer to FIG. 2E. After the break point is recovered, the two ports are kept blocking (step 305). The two switches with the blocking ports send a second control packet to the head switch and the tail switch, respectively (step 306). When the head switch receives the second control packet, it transmits a third control packet to the switch near the head switch and having a blocking port, setting its blocking port as forwarding (step 307). When the tail switch receives the second control packet, it sets the second port as blocking and sends another third control packet to the switch near the tail switch and having a blocking port, setting its blocking port as forwarding (step 308).

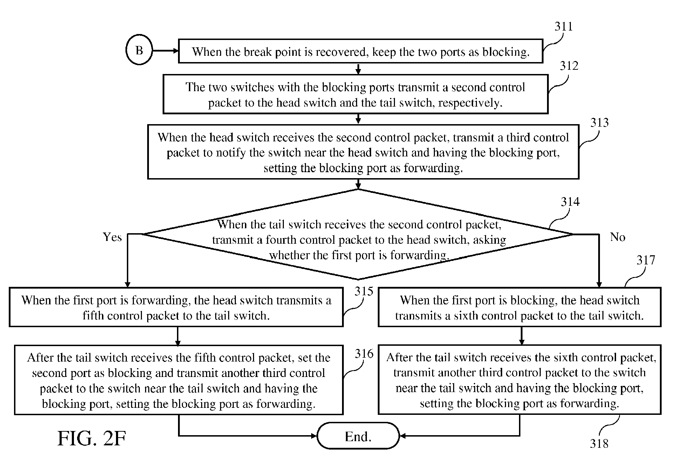

When the break point is recovered, in addition to resuming the chainlike network according to steps 305 to 308, the two ports can be kept blocking as in FIG. 2F (step 311). The two switches with the blocking ports send a second control packet to the head switch and the tail switch, respectively (step 312). When the head switch receives the second control packet, it sends a third control packet to notify the switch near the head switch and having the blocking port, setting its blocking port as forwarding (step 313). When the tail switch receives the second control packet, it transmits a fourth control packet to the head switch to ask whether the first port is forwarding (step 314). When the first port is forwarding, the head switch transmits a fifth control packet to the tail switch (step 315). After the tail switch receives the fifth control packet, it sets the second port as blocking and transmits another third control packet to the switch near the tail switch and having a blocking port, setting its blocking port as forwarding (step 316). When the first port is blocking, the head switch sends a sixth control packet to the tail switch (step 317). After the tail switch receives the sixth control packet, it sends another third control packet to the switch near the tail switch and having a blocking port, setting its blocking port as forwarding (step 318).

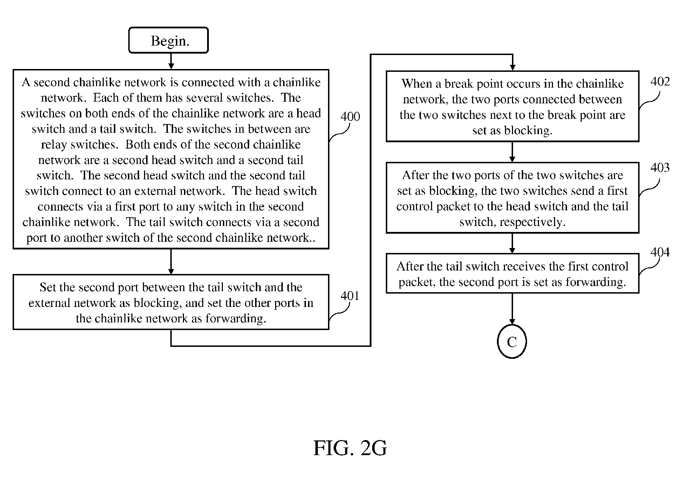

A third embodiment of the disclosed chainlike network backup method is given by the flowcharts in FIGS. 2G to 2I. Please refer to FIG. 2G. This embodiment involves the following steps. A second chainlike network is connected to a chainlike network. Each of the chainlike network and the second chainlike network has several switches. The switches on both ends of the chainlike network are the head switch and the tail switch. The switch between the head switch and the tail switch is the relay switch. The switches on both ends of the second chainlike network are the second head switch and the second tail switch. The second head switch and the second tail switch connect to an external network. The head switch connects via a first port to any switch in the second chainlike network. The tail switch connects via a second port to another switch in the second chainlike network (step 400). The second port of the tail switch is set as blocking, and the other ports on the chainlike network are set as forwarding (step 401). When a break point occurs in the chainlike network, the two switches next to the break point set the two ports between them as blocking (step 402). After the two ports of the two switches become blocking, the two switches send a first control packet to the head switch and the tail switch, respectively (step 403). After the tail switch receives the first control packet, the second port is set as forwarding (step 404).

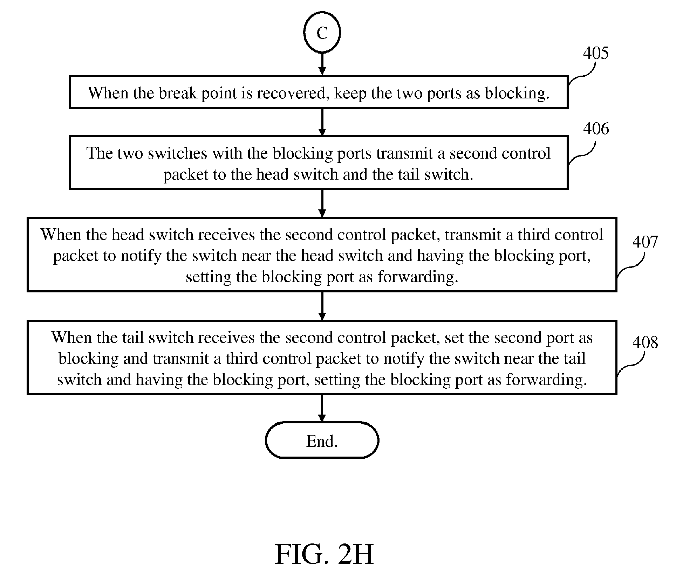

Please refer to FIG. 2H. After the break point is recovered, the two ports are kept blocking (step 405). The two switches with the blocking ports send a second control packet to the head switch and the tail switch, respectively (step 406). When the head switch receives the second control packet, it transmits a third control packet to the switch near the head switch and having a blocking port, setting its blocking port as forwarding (step 407). When the tail switch receives the second control packet, it sets the second port as blocking and sends another third control packet to the switch near the tail switch and having a blocking port, setting its blocking port as forwarding (step 408).

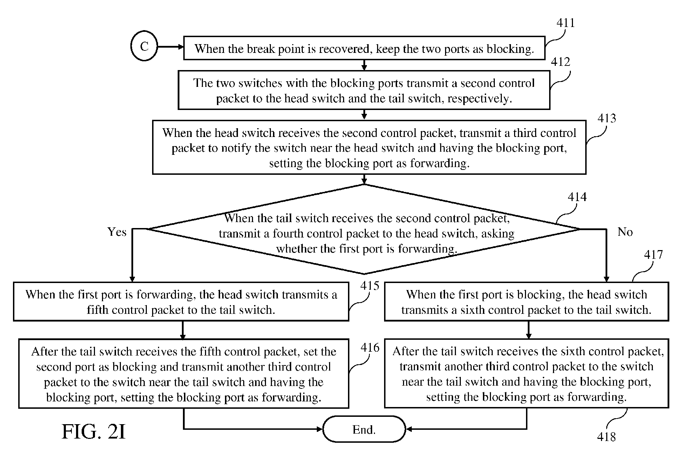

When the break point is recovered, in addition to resuming the chainlike network according to steps 405 to 408, the two ports can be kept blocking as in FIG. 2I (step 411). The two switches with the blocking ports send a second control packet to the head switch and the tail switch, respectively (step 412). When the head switch receives the second control packet, it sends a third control packet to notify the switch near the head switch and having the blocking port, setting its blocking port as forwarding (step 413). When the tail switch receives the second control packet, it transmits a fourth control packet to the head switch to ask whether the first port is forwarding (step 414). When the first port is forwarding, the head switch transmits a fifth control packet to the tail switch (step 415). After the tail switch receives the fifth control packet, it sets the second port as blocking and transmits another third control packet to the switch near the tail switch and having a blocking port, setting its blocking port as forwarding (step 416). When the first port is blocking, the head switch sends a sixth control packet to the tail switch (step 417). After the tail switch receives the sixth control packet, it sends another third control packet to the switch near the tail switch and having a blocking port, setting its blocking port as forwarding (step 418).

It should be emphasized that the difference among FIGS. 2A to 2C FIGS. 2D to 2F, and FIGS. 2G to 2I is in step 200, step 300, and step 400. It shows that the disclosed chainlike network backup method can be used in chainlike networks connected with different network structures. For example, step 200 connects the chainlike network to the external network; step 300 connects multiple chainlike networks with the same external network; and step 400 connects the chainlike network with another chainlike network (i.e., the second chainlike network), and the head switch in the chainlike network is connected to any switch in the second chainlike network and the tail switch is connected to another switch in the second chainlike network.

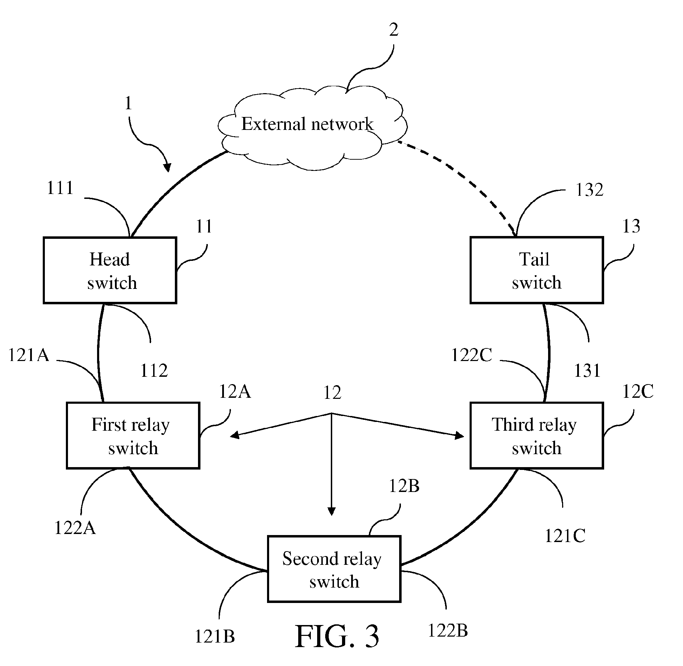

Please refer to FIGS. 3 to 8. Embodiments are used to explain how the disclosed chainlike network backup method is used in different network structures. FIG. 3 is a schematic view of the disclosed network system with a chainlike network when it is normal. It includes: a chainlike network 1, an external network 2, a head switch 11, several relay switches 12 (a first relay switch 12A, a second relay switch 12B, and a third relay switch 12C), a tail switch 13, a first port 111, and ports 112, 121A, 122A, 121B, 122B, 121C, 122C, 131. In this embodiment, the number of the relay switches 12 is three, including a first relay switch 12A, a second relay switch 12B, and a third relay switch 12C. The head switch 11 of the chainlike network 1 further has the first port 111 and the port 112. The tail switch 13 further has the second port 132 and the port 131. The first relay switch 12A, second relay switch 12B, and third relay switch 12C have ports 121A, 122A, ports 121B, 122B, and ports 121C, 122C, respectively.

It is clear in FIG. 3 that in a stable network, the chainlike network 1 must have an switch connecting with the external network whose port is kept blocking (steps 200, 201 in FIG. 2A). In this embodiment, the second port 132 of the tail switch 13 is set as blocking. The other ports 12, 121A, 122A, 121B, 122B, 121C, 122C, 131 are set as forwarding. When any switch in the chainlike network 1 is out of order or any forwarding port becomes blocking (e.g., broken transmission), then it becomes a break point of the chainlike network 1. In this case, the second port 132 of the tail switch 13 becomes on. This embodiment assumes that the transmission line between the second relay switch 12B and the third relay switch 12C is closed.

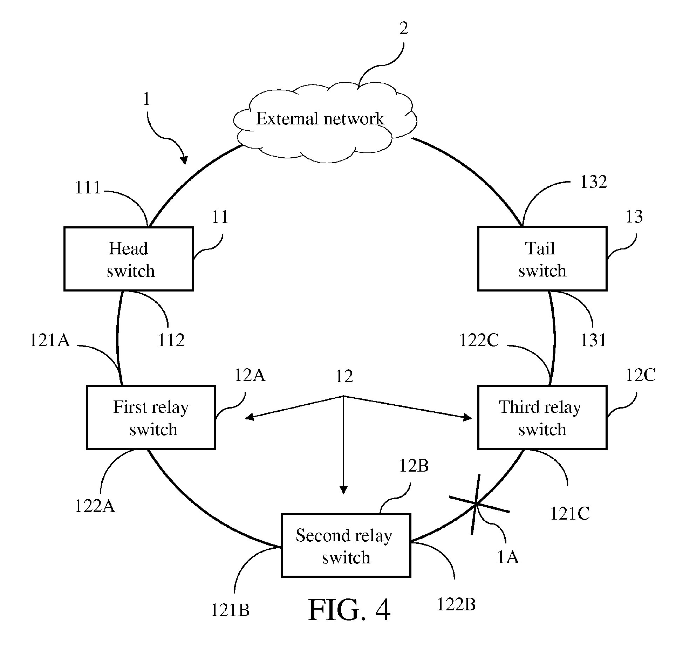

Please refer to FIG. 4, which is a schematic view of the disclosed network system with a chainlike network when it has a problem. When the transmission line between the second relay switch 12B and the third relay switch 12C breaks, it means that there is a break point 1A in the chainlike network 1. The second relay switch 12b and the third relay switch 12C next to the break point 1A then set the ports 122B, 121C between them as blocking. Afterwards, the relay switch 12B sends a first control packet to the head switch 11, and the relay switch 12C also sends another first control packet to the tail switch 13. After the tail switch 13 receives the first control packet, it sets the second port 132 as forwarding. Since the head switch 11 is not the tail switch 13 it does not process anything after receiving the first control packet. As a consequence, the tail switch 13 and the third relay switch 12C can communicate with the external network 2 via the second port 132. The head switch 11, the first relay switch 12A, and the second relay switch 12B communicate with the external network 2 via the first port 111. When the chainlike network 1 has a break point 1A, the processing steps are given in FIG. 2A, steps 202 to 204.

After the break point 1A is recovered, the second relay switch 12B keeps the port 122B blocking, and sends a second control packet to the head switch 11 to notify the connection resume. The third relay switch 12C also keeps the port 121C blocking, and sends another second control packet to the tail switch 13 to notify the connection resume. It should be particularly mentioned that keeping those ports blocking is to prevent the chainlike network 1 from looping.

When the head switch 11 receives the second control packet, the head switch 11 transmits a third control packet to let the second relay switch 12B next to the head switch 11 set the port 122B as forwarding. When the tail switch 13 receives the second control packet, it sets the second port 132 as blocking and sends another third control packet to the third relay switch 12C next to the tail switch 13. The third relay switch 12C then sets the blocking port 121C as forwarding. Up to this point, the connection status goes from FIG. 4 to FIG. 3. The detailed steps of excluding the break point 1A are given in FIG. 2B, steps 205 to 208.

Note that the invention does not restrict the processing steps of excluding the break point 1A in the above description. In practice, to exclude the break point 1A, the port 122B and the port 121C connected to the port 122B are kept blocking. In this case, the two switches (i.e., the second relay switch 12B and the third relay switch 12C) with the blocking ports 122B, 121C transmit second control packets to the head switch 11 and the tail switch 13, respectively. When the head switch 11 receives the second control packet the head switch 11 transmits a third control packet to notify the second relay switch 12B about setting the port 122B as forwarding. When the tail switch 13 receives the second control packet, it transmits a fourth control packet to the head switch 11, asking whether the first port 111 is forwarding.

If the first port 111 is forwarding, the head switch 11 sends a fifth control packet to the tail switch 13. After the tail switch 13 receives the fifth control packet, it sets the second port 132 as blocking and sends another third control packet to the third relay switch 12C, setting the blocking port 121C of the third relay switch 12C as forwarding. On the other hand, if the first port is blocking, the head switch 11 transmits a sixth control packet to the tail switch 13. After the tail switch 13 receives the sixth control packet, it sends another third control packet to the third relay switch 12C, setting the blocking port 121C of the third relay switch 12C as forwarding. Up to this point, the above-mentioned backup mechanism quickly resumes the communication of the chainlike network 1 with outside. Detailed steps of excluding the break point 1A are given in FIG. 2C, steps 211 to 218. Whether the chainlike network 1 has a break point 1A can be detected in the physical layer or by transmitting packets through the switches 10 (see FIG. 1). For example, if there is a timeout when transmitting a packet through a port, then the chainlike network 1 is determined to have a break point 1A. But the invention is not limited to this particular method.

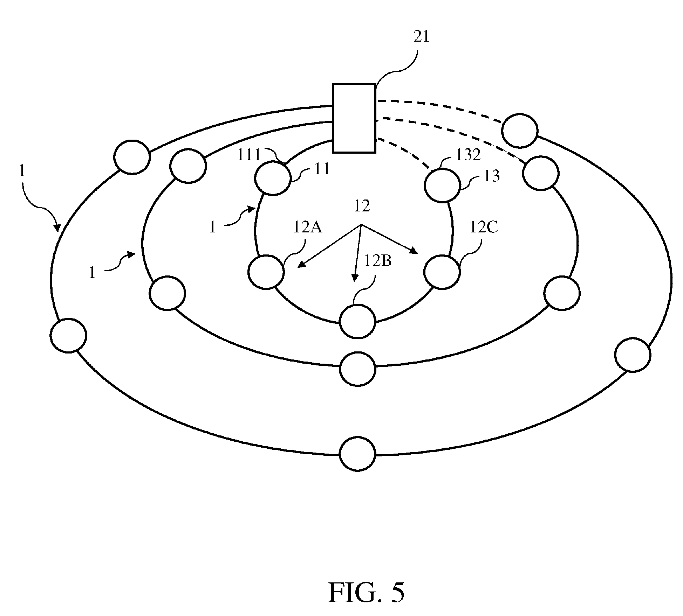

FIG. 5 is a schematic view of the disclosed network system with a chainlike network connected with an external network. The network environment is as in steps 300 and step 301 of FIG. 2D. As mentioned before, the chainlike network 1 is connected with the external network 2. In practice, the external network 2 can include one or more than one external network devices 21. As seen in FIG. 5, to connect the chainlike network 1 to the external network devices 21, one simply connects the head switch 11 and the tail switch 13 to the external network devices 21. Besides, the external network devices 21 can simultaneously connect to several chainlike networks 1. Each chainlike network 1 directly connects to the external network devices 21 via the first port 111 of the head switch 11 and the second port 132 of the tail switch 13. Moreover, the first port 111 or the second port 132 is kept blocking. This prevents interference when the chainlike network 1 and the external network devices 21 are connected. When the chainlike network 1 has a break point, the detailed processing steps are given in FIG. 2D, steps 302 to 304. The steps of excluding the break point are given in FIG. 2E, steps 305 to 308, or FIG. 2F, steps 311 to 318.

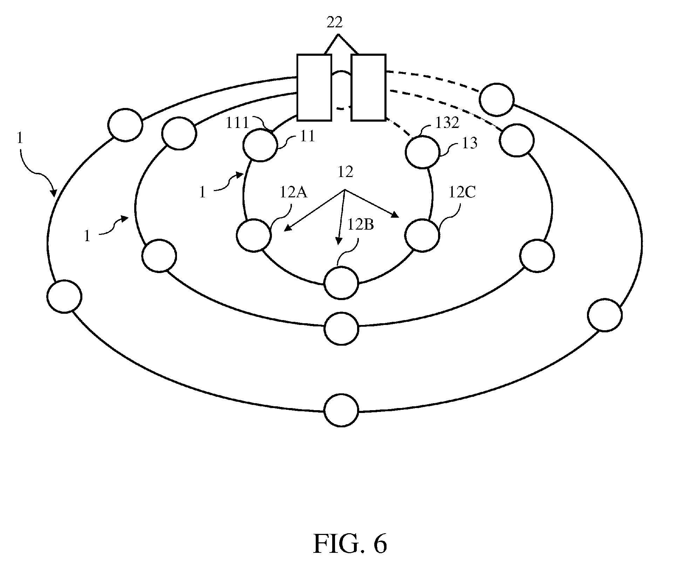

Please refer to FIG. 6, which is a schematic view of the disclosed network system with a chainlike network connected with an external redundant network structure. The network environment is as in steps 300 and 301 of FIG. 2D. In practice, the chainlike network 1 can connect to an external redundant network structure 22, such as a redundant ring, STP, and RSTP network. The external redundant network structure 22 can be regularly checked using control packets to see if its network connection is normal. If there is any problem, the redundant mechanism is started to turn on the backup circuit. When the head switch 11 or the tail switch 13 of the chainlike network 1 receives the redundant control packet of the external redundant network structure 22, the head switch 11 or the tail switch 13 does not pass the redundant control packet to the next switch (i.e., the relay switch 12). This does not participate in the operation of the redundant mechanism of the external redundant network structure 22, preventing interference with the external redundant network structure 22. Likewise, when the chainlike network 1 has a break point, detailed steps are given in FIG. 2D, steps 302 to 304. When the break point is recovered, detailed steps are given in FIG. 2E, steps 305 to 308 or FIG. 2F, steps 311 to 318. On the other hand, the disclosed chainlike network structure does not need to establish a ring coupling with the ring network structure. This method does not reduce the complexity in the connection with the ring network structure, the head switch 11 and the tail switch 13 does not require a connecting circuit when the chainlike network 1 connects to the external redundant network structure 22. This saves at least one circuit line and two ports. The network building cost can thus be reduced. When the head switch 11 and the tail switch 13 are far apart with a complicated terrain in between, the invention can even greatly lower the network building cost.

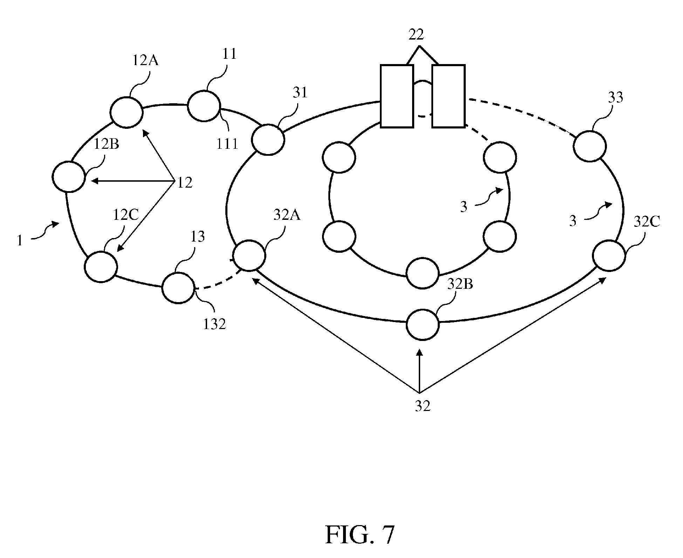

Please refer to FIG. 7, which is a schematic view of the disclosed network system with a chainlike network connected with a second chainlike network. The network environment is as in steps 400 and 401 of FIG. 2G. In practice, the chainlike network 1 can be connected with a second chainlike network 3. The switches on both ends of the chainlike network 1 are the head switch 11 and the tail switch 13, respectively. The switch between the head switch 11 and the tail switch 13 is the relay switch 12. Both ends of the second chainlike network 3 are the second head switch 31 and the second tail switch 33. The switch between the second head switch 31 and the second tail switch 33 is the relay switch 32. The second head switch 31 and the second tail switch 33 connect to the external network 2 (e.g., an external redundant network structure 22). The head switch 11 connects via the first port 111 to any switch in the second chainlike network 3 (e.g., the second head switch 31). The tail switch 13 connects via the second port 132 to another switch in the second chainlike network 3 (e.g., the third relay switch 32A). It should be explained that the first port 111 or the second port 132 has to set as blocking to prevent looping. The second head switch 31 or the second tail switch 33 in the second chainlike network 3 also need to set its ports to the external redundant network structure 22 as blocking. In this drawing, the second port 132 of the tail switch 13 and the port of the second tail switch 33 to the external redundant network structure 22 have to set as blocking. The dashed line indicates the connection relation.

As described above, when a break point occurs in the chainlike network 1 or the second chainlike network 3, detailed processing steps are given in FIG. 2G, steps 402 to 404. When the break point is recovered, detailed steps are given in FIG. 2H, steps 405 to 408, or FIG. 2I, steps 411 to 418.

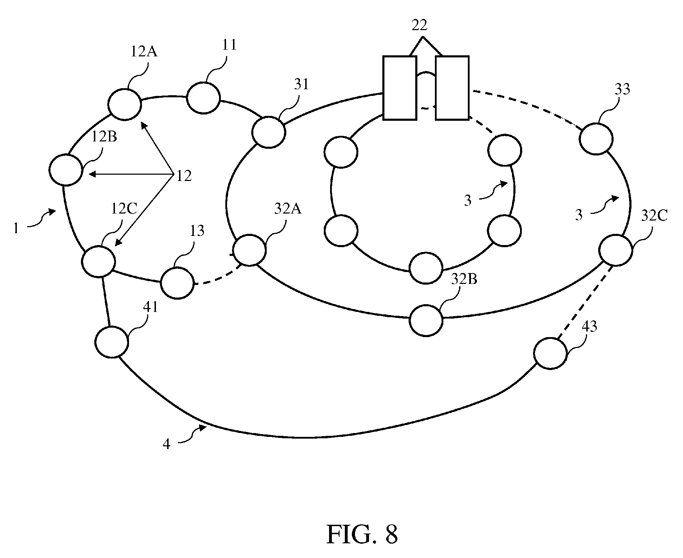

Please refer to FIG. 8, which is a schematic view of several chainlike networks connected together according to the invention. Besides the connection between the chainlike network 1 and the second chainlike network 3, one can further connect a third chainlike network 4 to the chainlike network 1 and the second chainlike network 3. As shown in the drawing, the third chainlike network 4 only has the head switch 41 and the tail switch 43. The head switch 41 can connect to any switch in the chainlike network 1 (e.g., the third relay switch 12C), and the tail switch 43 can connect to any switch in the second chainlike network 3 (e.g., the third relay switch 32C). That is, a single chainlike network (e.g., the third chainlike network 4) can simultaneously connect to several chainlike networks (e.g., the chainlike network 1 and the second chainlike network 3). It should be particularly mentioned that the port between the head switch 41 and the third relay switch 12C or the port between the tail switch 43 and the third relay switch 32C must be set as blocking to prevent looping. The steps of excluding the break point in each of the chainlike networks (i.e., the chainlike network 1, the second chainlike network 3, and the third chainlike network 4) are similar to those in the above-mentioned embodiments. The only difference is in the different external networks connected by the chainlike networks. They are thus not repeated here again.

In summary, the invention differs from the prior art in that both ends of the chainlike network are set as the head switch and the tail switch. The port of the head switch or the tail switch to the external network is set as blocking. When the chainlike network has a break point, the two switches next to the break point send out a first control packet to the head switch and the tail switch. The original blocking port is then set as forwarding. The network can thus quickly resume its communications with outside. This technique solves the problems existing in the prior art. Moreover, the invention increases the network reliability and lowers the building cost.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A network system with a chainlike network, comprising:
an external network for communications with outside; and
a chainlike network connected with the external network and having a plurality of switches, the chainlike network further including:
a head switch, which connects via a first port to the external network with the first port being set as forwarding/blocking; and
a tail switch, which connects via a second port to the external network with the second port being set as blocking/forwarding;
wherein the head switch and the tail switch connect via a port to the chainlike network, respectively.

2. The network system with a chainlike network of claim 1 with the chainlike network further including a relay switch, wherein the relay switch connects with the head switch and the tail switch to form the chainlike network.

3. The network system with a chainlike network of claim 1, wherein when the chainlike network has a break point, the first port or the second port that is blocking by default is turned forwarding and, when the break point is recovered, the first port or the second port is set as blocking.

4. The network system with a chainlike network of claim 2 with the relay switch including at least two ports and, wherein when one of the ports breaks, the first port or the second port that is blocking by default is turned forwarding and, when the port resumes its connection, the first port or the second port is set as blocking.

5. The network system with a chainlike network of claim 2, wherein the relay switch, the head switch, and the tail switch are all the same switches, and the switches are set as the head switch, the tail switch, or the relay switch via a setting parameter, the setting parameter being adjusted via some command or interface provided by the network switch devices.

6. The network system with a chainlike network of claim 1, wherein the second port is set as blocking by default when the first port is set as forwarding and the second port is set as forwarding by default when the first port is set as blocking.

7. The network system with a chainlike network of claim 1, wherein the external network is an external redundant network structure and connects to the head switch and the tail switch of the chainlike network, the external redundant network structure being a redundant ring, Spanning Tree Protocol (STP), or Rapid Spanning Tree Protocol (RSTP) network structure.

8. A chainlike network backup method used in a chainlike network that connects with an external network and has a plurality of switches, with the switches on both ends of the chainlike network as a head switch and a tail switch and the switches connected between the head switch and the tail switch as relay switches, and the head switch and the tail switch connecting via a first port and a second port, respectively, to the external network, the method comprising the steps of:
setting the second port between the tail switch and the external network as blocking and setting the other ports in the chainlike network as forwarding;
when the chainlike network has a break point, setting the connected two ports between the two switches next to the break point as blocking;
transmitting a first control packet to the head switch and the tail switch from the two switches, respectively; and
setting the second port as forwarding after the tail switch receives the first control packet.

9. The method of claim 8 further comprising the steps of:
keeping the two blocking ports blocking, after the break point is recovered;
transmitting a second control packet from the two switches with the blocking ports to the head switch and the tail switch, respectively;
after the head switch receives the second control packet, transmitting a third control packet from the head switch to the switch near the head switch and having the blocking port, setting the blocking port as forwarding; and
after the tail switch receives the second control packet, setting the second port as blocking and transmitting another third control packet from the tail switch to the switch near the tail switch and having the blocking port, setting the blocking port as forwarding.

10. The method of claim 8 further comprising the steps of:
keeping the two blocking ports blocking when the break point is recovered;
transmitting a second control packet from the two switches with the blocking ports to the head switch and the tail switch, respectively;
after the head switch receives the second control packet, transmitting a third control packet from the head switch to the switch near the head switch and having the blocking port, setting the blocking port as forwarding;
when the tail switch receives the second control packet, transmitting a fourth control packet from the tail switch to the head switch, asking whether the first port is forwarding;
when the first port is forwarding, transmitting a fifth control packet from the head switch to the tail switch;
after the tail switch receives the fifth control packet, setting the second port as blocking and transmitting another third control packet from the tail switch to the switch near the tail switch and having the blocking port, setting the blocking port as forwarding;
when the first port is blocking, transmitting a sixth control packet from the head switch to the tail switch; and
after the tail switch receives the sixth control packet, transmitting another third control packet from the tail switch to the switch near the tail switch and having the blocking port, setting the blocking port as forwarding.

11. A chainlike network backup method used in a chainlike network that connects with a second chainlike network, with each of the chainlike network and the second chainlike network having a plurality of switches, the switches on both ends of the chainlike network being a head switch and a tail switch and the switches connected between the head switch and the tail switch being relay switches, the switches on both ends of the second chainlike network being a second head switch and a second tail switch, and the second head switch and the second tail switch connecting to an external network, and the head switch connecting via a first port any switch in the second chainlike network and the tail switch connecting via a second port to another switch in the second chainlike network, the method comprising the steps of:
setting the second port of the tail switch as blocking and setting the other ports in the chainlike network as forwarding;
when the chainlike network has a break point, setting the connected two ports between the two switches next to the break point as blocking;
transmitting a first control packet to the head switch and the tail switch from the two switches, respectively;
setting the second port as forwarding after the tail switch receives the first control packet;
keeping the two blocking ports blocking after the break point is recovered;
transmitting a second control packet from the two switches with the blocking ports to the head switch and the tail switch, respectively;
after the head switch receives the second control packet, transmitting a third control packet from the head switch to the switch near the head switch and having the blocking port, setting the blocking port as forwarding; and
after the tail switch receives the second control packet, setting the second port as blocking and transmitting another third control packet from the tail switch to the switch near the tail switch and having the blocking port, setting the blocking port as forwarding.

12. The method of claim 11 further comprising the steps of:
keeping the two blocking ports blocking after the break point is recovered;
transmitting a second control packet from the two switches with the blocking ports to the head switch and the tail switch, respectively;
after the head switch receives the second control packet, transmitting a third control packet from the head switch to the switch near the head switch and having the blocking port, setting the blocking port as forwarding; and
after the tail switch receives the second control packet, setting the second port as blocking and transmitting another third control packet from the tail switch to the switch near the tail switch and having the blocking port, setting the blocking port as forwarding.

13. The method of claim 11 further comprising the steps of:
keeping the two blocking ports blocking when the break point is recovered;
transmitting a second control packet from the two switches with the blocking ports to the head switch and the tail switch, respectively;
after the head switch receives the second control packet, transmitting a third control packet from the head switch to the switch near the head switch and having the blocking port, setting the blocking port as forwarding;
when the tail switch receives the second control packet, transmitting a fourth control packet from the tail switch to the head switch, asking whether the first port is forwarding;
when the first port is forwarding, transmitting a fifth control packet from the head switch to the tail switch;
after the tail switch receives the fifth control packet, setting the second port as blocking and transmitting another third control packet from the tail switch to the switch near the tail switch and having the blocking port, setting the blocking port as forwarding;
when the first port is blocking, transmitting a sixth control packet from the head switch to the tail switch; and
after the tail switch receives the sixth control packet, transmitting another third control packet from the tail switch to the switch near the tail switch and having the blocking port, setting the blocking port as forwarding.

14. The method of claim 8 or 13 further comprising the step of setting the switches as the head switch, the tail switch, or the relay switch via a setting parameter, the setting parameter being adjusted via some command or interface provided by the network switch devices.

15. The method of claim 8 or 13, wherein the existence of the break point is determined by detecting packet transmissions or the physical layer.
